# FASCICULE DE BREVET EUROPEEN

(11) **EP 0 995 033 B1**
(45) Date de publication et mention de la délivrance du brevet: **30.01.2002**
(21) Numéro de dépôt: 98935100.2
(22) Date de dépôt: 06.07.1998
(51) Int. Cl.: F03C 1/24, B60T 13/22, F03C 1/04

(54) **MOTEUR HYDRAULIQUE A FREIN COMPACT**
HYDRAULIKMOTOR MIT KOMPAKTBREMSE
HYDRAULIC ENGINE WITH COMPACT BRAKE

(30) Priorité: 07.07.1997 FR 9708578; 29.06.1998 FR 9808209
(43) Date de publication de la demande: 26.04.2000
(73) Titulaire: POCLAIN HYDRAULICS INDUSTRIE, 60411 Verberie (FR)
(72) Inventeur: ALLART, Bernard, F-60800 Crépy-en-Valois (FR); BIGO, Louis, F-60200 Compiègne (FR); PEROT, Marc, F-60330 Eve (FR); NOEL, Alain, F-60410 Verberie (FR)
(74) Mandataire: Intès, Didier Gérard André
(86) Numéro de dépôt international: FR9801435
(87) Numéro de publication internationale: WO9902854

(56) Documents cités:
- EP-A- 0 335 255
- FR-A- 2 644 210
- FR-A- 2 739 418
- US-A- 3 690 097

## Description

La présente invention concerne un moteur hydraulique comprenant :
- un carter ;
- un organe de réaction, solidaire du carter et présentant une périphérie interne qui délimite un profil de réaction ;
- un bloc-cylindres, qui est monté à rotation relative autour d'un axe de rotation par rapport audit organe de réaction et qui comporte une pluralité d'ensembles de cylindres et de pistons, disposés radialement par rapport à l'axe de rotation et susceptibles d'être alimentés en fluide sous pression ;
- un distributeur interne de fluide, solidaire du carter vis-à-vis de la rotation autour de l'axe de rotation et comportant des conduits de distribution susceptibles de mettre les cylindres en communication avec des conduits d'alimentation et d'échappement de fluide ; et
- un système de freinage comprenant des premiers et des deuxièmes moyens de freinage respectivement solidaires du carter et du bloc-cylindres vis-à-vis de la rotation autour de l'axe de rotation, un piston de freinage apte à occuper une position de freinage dans laquelle il sollicite les premiers et deuxièmes moyens de freinage en engagement de freinage pour empêcher la rotation relative du bloc-cylindres et du carter et une position de défreinage, ainsi que des moyens pour déplacer le piston de freinage entre lesdites positions de freinage et de défreinage.

L'invention s'applique plus particulièrement à des moteurs dans lesquels le frein a un rôle de frein de stationnement ou de frein de sécurité, c'est-à-dire que ce frein agit sans dissipation d'énergie et en dessous d'une vitesse prédéterminée, qui varie selon les réalisations et qui est de l'ordre de 100 tr/min en moyenne.

Dans les moteurs connus du type précité, les premiers moyens de freinage sont généralement constitués par une première série de lamelles de frein en forme d'anneaux qui sont solidaires d'une partie du carter dénommée « carter de frein », par l'intermédiaire de cannelures axiales. Le carter de frein est fixé aux autres parties du carter par des vis ou tout moyen approprié de solidarisation. Les deuxièmes moyens de freinage sont constitués par une deuxième série de lamelles de frein en forme d'anneaux intercalés entre les lamelles de la première série et solidaires en rotation d'un arbre de frein par des cannelures axiales. Cet arbre de frein est lui-même solidarisé en rotation avec le bloc-cylindres par l'intermédiaire de cannelures. Le piston de freinage est disposé dans le carter de frein, à une extrémité de ce dernier. Il est généralement sollicité dans le sens du freinage par une rondelle ressort et commandé hydrauliquement dans le sens de la désactivation du freinage à l'aide d'un fluide sous pression contenu dans une chambre de défreinage.

Ces systèmes connus sont globalement satisfaisants mais ils présentent plusieurs inconvénients.

D'une part, ils comportent un nombre de pièces relativement important et dont l'assemblage est délicat. D'autre part, lors du freinage ou de la désactivation du freinage, le piston risque de "patiner" par rapport au disque de freinage dont il est le plus proche. De plus, les disques de freinage sont très fortement sollicités par le couple de freinage. Ils doivent être extrêmement résistants dans la région des cannelures, dans laquelle les contraintes sont extrêmement élevées du fait de la faiblesse des surfaces de contact entre les cannelures des disques et celles de la pièce, le carter de frein ou l'arbre de frein, dont ils sont solidaires.

L'invention vise à améliorer les systèmes connus pour assurer un freinage sûr et efficace avec un nombre de pièces restreint ou, au moins, avec des pièces dont le dimensionnement et le mode d'assemblage sont tels qu'ils permettent de limiter le coût de fabrication de la partie "frein" du moteur.

Ce but est atteint grâce au fait que le piston de freinage est solidaire du carter vis-à-vis de la rotation autour de l'axe de rotation et présente une face active de freinage sensiblement radiale, un premier organe de freinage appartenant aux premiers moyens de freinage étant solidaire de ladite face active.

Comme on le verra dans la suite, le calage en rotation du piston de freinage avec le carter peut être réalisé par des profils de couplage comprenant des cannelures ou, de préférence, des ondulations qui sont exemptes d'arêtes vives ou de points anguleux. Ces ondulations forment une courbe dont la tangente peut être déterminée en tous points. Le piston de freinage est une pièce aux dimensions relativement importantes (en particulier en ce qui concerne l'épaisseur), de sorte que ce calage en rotation ne pose aucune difficulté particulière.

Le piston de freinage ou les profils de couplage peuvent être aisément réalisés de manière à supporter le couple élevé de freinage. Le premier organe de freinage est solidaire de la face active du piston, ce qui signifie qu'il est soit directement constitué par cette face active, soit usiné dans la face active, soit formé par une pièce séparée (série de dents d'un crabot ou première lamelle de frein) qui est fixée sur cette face active par tous moyens connus.

Dans ce dernier cas, il est aisé de choisir les moyens de fixation, par exemple la soudure, de telle sorte qu'ils supportent le couple de freinage. De plus, il est aisé de faire en sorte que les surfaces de contact entre le premier organe de freinage et le piston de freinage soient relativement élevées (ces surfaces sont formées sur des faces radiales), de sorte que les contraintes que subit la liaison entre le premier organe de freinage et le piston lors du freinage sont proportionnellement moins élevées que les contraintes auxquelles, dans les systèmes classiques, est soumise la liaison entre le premier disque et la pièce (carter ou arbre de frein) dont il est solidaire en rotation.

Avantageusement, les premiers et deuxièmes moyens de freinage comprennent respectivement une première et une deuxième série de dents d'un crabot, la première série de dents formant le premier organe de freinage qui est solidaire de la face active du piston de freinage.

Dans ce cas, la fabrication et l'assemblage du moteur sont encore simplifiés. En effet, la première série de dents peut être directement usinée sur la face active du piston de freinage, ou être réalisée sur une bague annulaire elle-même fixée sur le piston de freinage. De même, la deuxième série de dents peut être directement usinée sur une face radiale du bloc-cylindres ou sur une autre pièce solidaire en rotation du bloc-cylindres, ou bien elle peut être réalisée sur une bague annulaire fixée au bloc-cylindres ou à une autre pièce. De plus, les efforts mis en jeu lors du freinage qui affectent les premiers moyens de freinage (la première série de dents) se transmettent intégralement au carter par la solidarisation en rotation du piston de freinage avec ce carter.

De préférence, le moteur comporte une couronne de couplage, qui forme une partie du carter et qui présente une face axiale interne avec laquelle coopère une face axiale externe du piston de freinage pour caler ledit piston en rotation par rapport au carter, lesdites faces axiales interne et externe ayant des profils de couplage adaptés à cet effet.

Cette couronne est avantageusement directement voisine de l'organe de réaction et peut même être constituée par un prolongement axial de cet organe de réaction, qui fait corps avec lui.

Dans ce dernier cas, on choisit avantageusement que le profil de couplage de la face axiale interne de la couronne de couplage soit analogue au profil de réaction. Ainsi, l'organe de réaction étant correctement dimensionné pour assurer la transmission du couple moteur, on est assuré que les organes par lesquelles passent le couple de freinage sont également correctement dimensionnés. De plus, l'usinage du profil de couplage formé sur la face axiale interne de la couronne de couplage est simplifié puisqu'il met à profit certain au moins des lobes de la came.

La couronne de couplage peut également être constituée par une pièce annulaire qui est interposée entre l'organe de réaction et la partie du carter, dénommé couvercle de distribution, qui entoure le distributeur. Dans ce cas, la fixation de la couronne de couplage aux autres parties du carter est évidemment très simple à réaliser. De plus, le piston de freinage est alors situé dans un espace annulaire ménagé autour du distributeur, sous la couronne, de sorte que l'encombrement axial total du moteur est diminué. Même dans ce cas, il est avantageux d'usiner la périphérie interne de la couronne de couplage de telle sorte qu'elle comporte des ondulations dont les parties en creux correspondent à certaine au moins des parties en creux des ondulations de l'organe de réaction. Ceci simplifie d'une part le calage angulaire de la couronne de couplage par rapport à l'organe de réaction lors du montage du carter du moteur. D'autre part, les ondulations de la couronne de couplage sont alors évidemment dimensionnées de manière à supporter le couple élevé de freinage.

De manière générale, il est avantageux que la couronne de couplage soit disposée de telle sorte que son profil de couplage se situe dans l'encombrement axial d'une autre pièce du moteur. Dans la disposition indiquée ci-dessus, ce profil se trouve dans l'encombrement axial du distributeur. Selon une autre variante avantageuse, la couronne de couplage peut être disposée de l'autre côté du bloc-cylindres par rapport au distributeur, son profil de couplage pouvant alors se trouver dans l'encombrement axial d'une autre pièce, telle qu'un palier à roulement(s) de support de la rotation relative du carter et de l'arbre ou du bloc-cylindres.

Il est extrêmement avantageux de faire en sorte que la partie du piston qui coopère avec le carter (la couronne de couplage) pour solidariser le piston en rotation avec ce carter soit éloignée de l'axe du moteur. Par exemple, elle se situe sensiblement dans le prolongement axial du profil de réaction. En effet, le couple de freinage s'exerçant entre le piston et le carter croît en fonction de la distance par rapport à l'axe de rotation du moteur des surfaces (profils de couplage) du carter et du piston qui coopèrent entre elles.

En choisissant précisément ces surfaces dans une région éloignée de l'axe, on fait en sorte qu'il soit possible d'obtenir des couples de freinage élevés avec des contraintes plus faibles que celles qui étaient mises en jeu dans l'art antérieur. Ceci constitue également un avantage, en particulier en terme de fiabilité du freinage et en terme de résistance à l'usure.

Dans la même optique, il est avantageux de faire en sorte que les moyens de freinage (par exemple les dents du crabot) par lesquels passent le couple de freinage soient situés dans une région de grand diamètre du moteur, ce qui permet de limiter considérablement les risques d'usure prématurée ou de rupture des pièces du moteur.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la figure 1 est une vue en coupe axiale d'un moteur conforme à l'invention,
- les figures 2 à 5 sont des vues partielles en coupe axiale montrant des variantes du moteur de la figure 1,
- la figure 6 est une vue schématique en coupe radiale prise selon la ligne VI-VI de la figure 1, montrant une variante,
- la figure 7 est une vue partielle en coupe axiale montrant une autre variante du moteur de la figure 1,
- la figure 8 est une vue partielle en coupe axiale montrant encore une autre variante,
- la figure 9 est une vue en coupe axiale d'un moteur conforme à l'invention selon un autre mode de réalisation,
- la figure 10 est une vue partielle en coupe axiale d'une variante de réalisation du moteur de la figure 9.

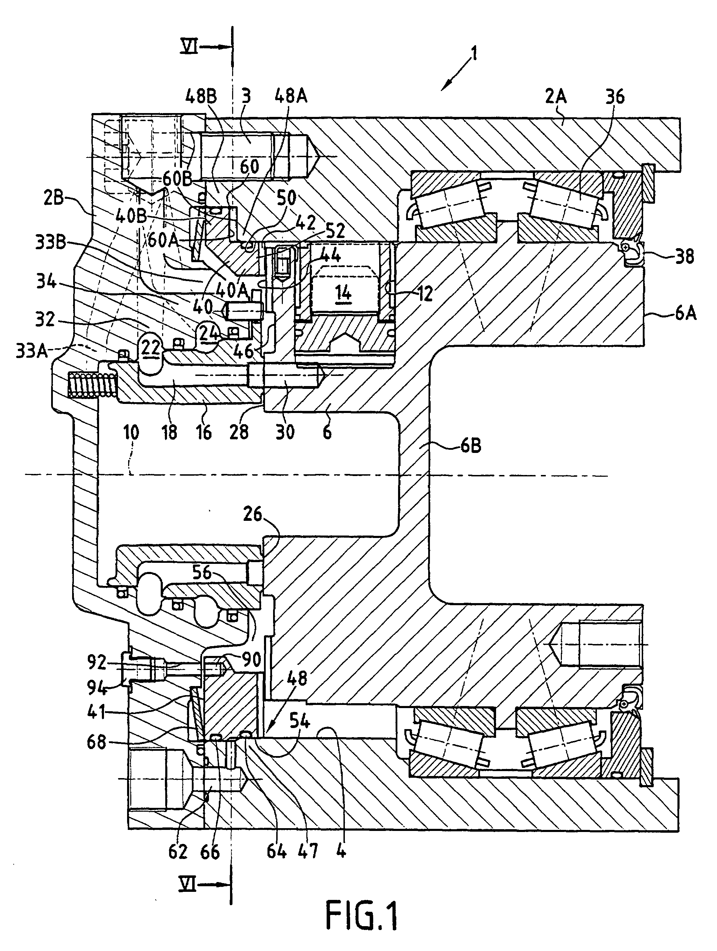

La figure 1 montre un moteur hydraulique 1 qui comporte :
- un carter fixe en deux parties 2A et 2B assemblées par des vis 3 ;
- un organe de réaction constitué par une came de réaction ondulée 4 ménagée sur la partie 2A du carter ;
- un bloc-cylindres 6 qui est monté à rotation relative autour d'un axe de rotation 10 par rapport à la came 4 et qui comporte une pluralité de cylindres radiaux 12 susceptibles d'être alimentés en fluide sous pression, à l'intérieur desquels sont montés coulissants des pistons 14 ;
- un distributeur interne de fluide 16, solidaire du carter vis-à-vis de la rotation autour de l'axe 10 et comportant des conduits de distribution 18 susceptibles de communiquer avec les cylindres 12.

Des gorges 22 et 24 sont ménagées entre la partie 2B du carter, qui forme un couvercle de distribution, et le distributeur interne 16. Les conduits de distribution débouchent, d'une part, dans l'une de ces gorges (le conduit 18 débouche dans la gorge 22) et, d'autre part, dans la face de distribution 26 du distributeur interne qui est perpendiculaire à l'axe 10 et en appui contre la face de communication 28 du bloc-cylindres. Dans cette face 28 débouchent des conduits de cylindre 30 qui sont disposés de manière à pouvoir être mis en communication avec les conduits de distribution lors de la rotation relative du distributeur interne et du bloc-cylindres.

Le moteur représenté comporte une seule cylindrée de fonctionnement, seules deux gorges étant ménagées entre la partie 2B du carter et le distributeur interne 16. Ces gorges sont elles-mêmes respectivement reliées à des conduits 32 et 34 qui débouchent dans une face extérieure du carter 2B pour être raccordés à un circuit de fluide hydraulique. Selon le sens de rotation du moteur, les conduits 32 et 34 peuvent être respectivement des conduits d'alimentation et d'échappement de fluide ou réciproquement. Des paliers à roulements coniques 36 supportent la rotation du bloc-cylindres par rapport à la partie 2A du carter.

Il doit être entendu que l'invention s'applique également à un moteur ayant plusieurs cylindrées distinctes de fonctionnement.

Des conduits de retour des fuites 33A et 33B sont également ménagés dans la partie 2B du carter.

Le moteur à carter fixe représenté sur la figure 1 ne comporte pas d'arbre distinct du bloc-cylindres. En effet, la face d'extrémité 6A de ce bloc-cylindres opposée à la partie 2B du carter constitue la sortie du moteur et, à l'aide de taraudages 7 adaptés à coopérer avec des vis (non représentées), cette extrémité du bloc-cylindres peut directement être fixée à un objet à entraîner en rotation.

Le bloc-cylindres n'est pas alésé de part en part mais présente une paroi transversale 6B qui ferme l'espace interne du moteur vis-à-vis de l'extérieur, cet espace interne étant étanché par un joint d'étanchéité 38.

Evidemment, cette configuration du bloc-cylindres ne constitue qu'un exemple et il est possible de prévoir une autre configuration, avec un arbre solidarisé en rotation avec le bloc-cylindres à l'aide de cannelures axiales.

Le moteur 1 comporte encore un système de freinage qui comprend un piston de freinage 40 dont une face radiale d'extrémité (sa "face active") porte des premiers moyens de freinage constitués par une première série de dents 42 d'un crabot, tandis que les deuxièmes moyens de freinage 44 sont constitués par la deuxième série de dents du crabot qui est solidaire d'une face d'extrémité 46 du bloc-cylindres 6, située en face de la face d'extrémité radiale du piston 40. Les séries de dents 42 et 44 sont donc en regard l'une de l'autre et l'on comprend que lorsque le piston est déplacé dans le sens le rapprochant du bloc-cylindres, elles viennent en prise pour assurer le freinage c'est-à-dire l'immobilisation relative du bloc-cylindres et de l'ensemble carter et came, tandis que lorsque le piston 40 est éloigné du bloc-cylindres, elles sont en situation de défreinage et permettent la rotation relative du bloc-cylindres 6 par rapport au carter 2A. Les dents des séries 42 et 44 sont orientées radialement et forment des reliefs s'étendant axialement.

Etant solidaire de la face d'extrémité 46 du bloc-cylindres, la deuxième série de dents 44 est évidemment solidaire du bloc-cylindres vis-à-vis de la rotation autour de l'axe 10. Pour assurer la solidarisation en rotation de la première série de dents 42 avec le carter du moteur, la partie 2A du carter qui porte la came présente un prolongement axial 48 formant une couronne de couplage qui a un tronçon axial formant un premier tronçon de couplage 47, ce dernier présentant une périphérie interne qui délimite un profil interne 50 analogue au profil de la came 4. Par exemple, le profil interne 50 peut être identique au profil de came 4 et, comme on le voit sur la figure 1, tout simplement consister en une prolongation axiale de la surface de came 4 au-delà de la face d'extrémité 46 du bloc-cylindres 6.

Pour coopérer avec le profil interne 50, le piston de freinage 40 présente quant à lui un deuxième tronçon de couplage 52 qui, sur sa face axiale externe, délimite un profil externe 54 adapté au profil interne 50. Lorsque le moteur est assemblé, le piston est disposé de telle sorte que le deuxième tronçon de couplage 52 est disposé dans le premier tronçon de couplage 47, le profil externe 54 coopérant avec le profil interne 50 pour solidariser le piston de freinage 40 en rotation avec la partie 2A du carter.

Par exemple, le profil interne peut être identique au profil de réaction et en constituer un prolongement axial, tandis que le profil externe peut être le profil conjugué exact de ce profil interne.

Sur la figure 1, le prolongement axial 48 de l'organe de réaction dans lequel est ménagé le premier tronçon de couplage 47, de même que le piston de freinage 40, sont situés du côté du bloc-cylindres 6 qui est tourné vers le distributeur interne de fluide 16.

On réalise ainsi le système de freinage sans pratiquement augmenter l'encombrement axial du moteur, puisque le piston de freinage 40 se trouve en fait dans une cavité annulaire 56 ménagée au-dessus du distributeur interne 16, sous la partie 2A du carter. En variante, on pourrait choisir de disposer le piston de freinage de l'autre côté du bloc-cylindres, ce qui augmenterait quelque peu l'encombrement axial du moteur. Cette variante pourrait toutefois s'avérer intéressante, par exemple dans le cas où les paliers qui supportent la rotation du bloc-cylindres par rapport au carter seraient réalisés dans des pièces rapportées et fixées, respectivement, au bloc-cylindres et au carter.

Au sujet des paliers de roulement 36, il faut noter que l'exemple de la figure 1 montre des paliers à roulements coniques, en lieu et place desquels on peut préférer utiliser des paliers à billes sphériques roulant dans des pistes à quatre points de contact, ce qui constituerait également un avantage du point de vue de l'encombrement axial.

Pour commander le déplacement axial du piston de freinage 40 dans le sens du défreinage, le moteur comporte une chambre de défreinage 60 susceptible d'être alimentée en fluide sous pression par un conduit de défreinage 62.

Cette chambre a une paroi sensiblement radiale qui est formée par une face 60A du piston, qui est tournée du même côté que la face active de ce dernier (la face active étant celle qui porte la série de dents 42) et qui est décalée axialement par rapport à cette face active (dans le sens allant en s'éloignant de la deuxième série de dents 44).

La chambre de défreinage est formée entre deux portions axiales étagées, respectivement 48A et 48B, appartenant au prolongement axial 48 de l'organe de réaction et deux portions axiales étagées, respectivement 40A et 40B appartenant au piston de freinage. La périphérie externe de la portion axiale 40A coopère avec la périphérie interne de la portion axiale 48A, le contact de coulissement entre lesdites périphéries internes et externes étant rendu étanche par un joint d'étanchéité 64. De même, la périphérie axiale externe de la portion 40B coopère avec la périphérie axiale interne de la portion 48B, ce contact de coulissement étant rendu étanche par un deuxième joint d'étanchéité 66.

Dans l'exemple représenté sur la figure 1, la portion 40A du piston constitue précisément le deuxième tronçon de couplage 52 et la portion 48A du prolongement axial 48 porte le profil interne 50 du premier tronçon de couplage 47. Les profils 50 et 54 jouent donc à la fois le rôle de surfaces de transmission du couple de freinage (à ce titre, ils présentent un profil identique ou analogue à celui de la came) et le rôle de surfaces de guidage pour le coulissement du piston tout en étant étanchées l'une par rapport à l'autre à l'aide du joint 64. Dans l'exemple de la figure 1, pour permettre ce contact étanche, les profils interne 50 et externe 54 sont exactement conjugués, c'est-à-dire qu'ils présentent les mêmes ondulations de forme complémentaire et s'emboîtent parfaitement l'un dans l'autre pratiquement sans jeu. Le joint 64 est par exemple disposé dans une gorge ménagée dans le profil 54 et sa forme reproduit également les ondulations des profils interne et externe, avec une épaisseur constante.

En revanche, la périphérie externe de la portion 40B du piston 40 et la périphérie interne de la portion 48B du prolongement axial 48 sont cylindriques et ne présentent pas d'ondulations, leur rayon étant légèrement supérieur au plus grand rayon du profil de came. Sur la moitié supérieure de la figure 1, la coupe axiale passe par le sommet d'une portion convexe de la came, dans laquelle le rayon de cette dernière est minimum. On voit qu'à cet endroit, la chambre 60 présente des parois radiales, respectivement 60A et 60B de dimensions relativement importantes. En revanche, dans la moitié inférieure de la figure 1, la coupe passe par le fond d'une surface concave de la came, dans laquelle son rayon est maximum et l'on voit que les parois radiales 60A et 60B de la chambre sont pratiquement inexistantes dans cette région. Le joint 66 est par exemple disposé dans une gorge pratiquée sur la périphérie externe de la portion 40B du piston et, dans la mesure où il doit réaliser l'étanchéité entre deux surfaces cylindriques, il présente une forme annulaire classique.

Lorsque la chambre 60 est alimentée en fluide sous pression, celui-ci tend à repousser le piston dans le sens du défreinage du fait des efforts qu'il exerce respectivement sur les parois radiales 60A et 60B. Le piston est en revanche rappelé dans le sens du freinage par une rondelle ressort 68 qui prend appui, d'une part, sur le carter de défreinage 2B et, d'autre part, sur la face du piston qui est opposée au bloc-cylindres.

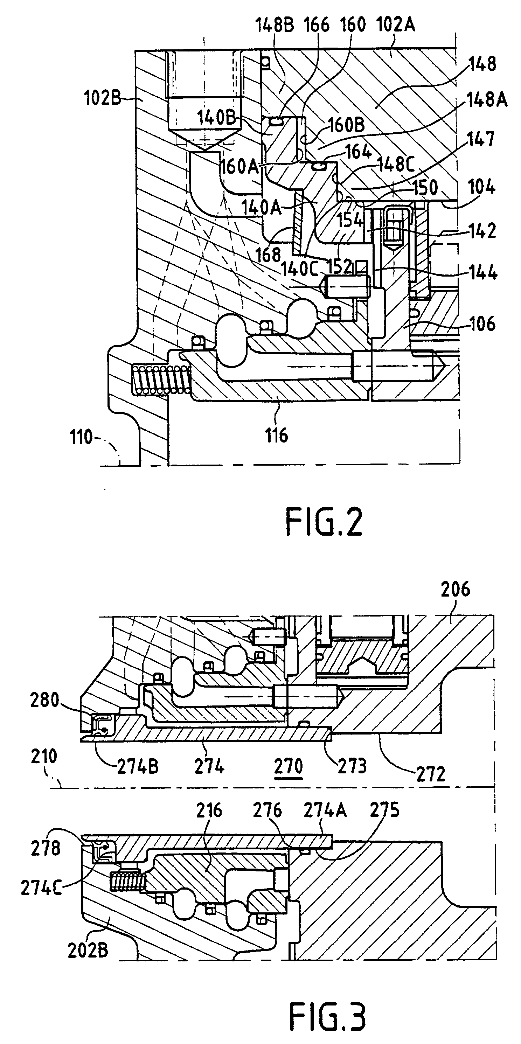

La figure 2 montre une variante de réalisation qui permet d'éviter de donner à l'un des joints qui étanche la chambre de défreinage une forme ondulée. Sur cette figure, les mêmes références que sur la figure 1, augmentées de 100, sont utilisées. La chambre de défreinage 160 est réalisée entre les portions axiales 148A et 148B de la couronne de couplage formée par le prolongement axial 148 et les portions axiales 140A et 140B du piston de freinage 140. Toutefois, les périphéries externes des portions 140A et 140B, de même que les périphéries internes des portions 148A et 148B, sont cylindriques, l'étagement entre ces portions axiales dotant la chambre de parois radiales 160A et 160B qui ont une hauteur constante dans toute la chambre. Pour ce faire, la première portion axiale 148A du prolongement axial 148 (celle qui se trouve la plus proche du bloc-cylindres 106) est raccordée au premier tronçon de couplage 147 par un décrochement 148C qui forme la transition entre la forme ondulée du profil interne 150 constituant la périphérie interne du tronçon de couplage 147 et la forme cylindrique de la périphérie interne de la portion 148A. De même, la première portion axiale du piston de freinage 140A est raccordée au deuxième tronçon de couplage 152 par un épaulement 140C qui forme la transition entre la forme ondulée du profil externe 154 formé par la périphérie externe du tronçon de couplage 152 et la périphérie externe cylindrique de la portion 140A. Ainsi, les joints 164 et 166 qui réalisent l'étanchéité de la chambre de défreinage ont des formes annulaires classiques.

Le décrochement 148C et l'épaulement 140C peuvent n'être présents que dans des régions correspondant aux zones convexes de la came 104, le rayon des surfaces cylindriques des périphéries internes de la portion 148A et externe de la portion 140A pouvant être sensiblement égal au rayon maximum que présente la came au fond de ses zones concaves.

Dans la variante de la figure 3, le moteur est aménagé de manière à présenter un évidement central qui le traverse de part en part. Une disposition de ce type présente un intérêt particulier pour certaines applications, en particulier pour celles dans lesquelles le moteur est utilisé pour entraîner un trépan de forage, auquel cas l'évidement traversant du moteur constitue un passage pour évacuer la boue de forage. Cette disposition est également particulièrement intéressante lorsqu'il est nécessaire de disposer d'un passage pour des organes d'un engin ou d'un outil entraîné à l'aide du moteur, par exemple pour des tuyaux véhiculant du fluide ou de l'air comprimé. Il est particulièrement intéressant d'utiliser un moteur de ce type pour l'entraînement des rouleaux de compactage d'un compacteur en mettant à profit la présence de l'évidement axial pour disposer l'arbre d'un moteur secondaire.

Sur la figure 3, les mêmes références que sur la figure 1, augmentées de 200, sont utilisées.

Pour réaliser le passage axial ou évidement central 270, le bloc-cylindres 206 présente un perçage axial 272 qui le traverse. La partie du moteur éloignée de l'axe 210 n'est pas représentée sur la figure 3, et le bloc-cylindres est supporté à rotation de la même manière que sur la figure 1. Ce perçage axial 272 étant prévu, le problème consiste à fermer et à étancher l'espace interne du moteur. Pour ce faire, un manchon cylindrique creux 274 est disposé dans le distributeur interne 216 en dépassant de part et d'autre des extrémités axiales de ce dernier. Plus précisément, ce manchon cylindrique creux présente une première extrémité axiale 274A, qui est située du côté du distributeur tourné vers le bloc-cylindres 206 et qui est raccordée de manière étanche à la paroi du perçage axial 272 du bloc-cylindres. Pour ce faire, un joint d'étanchéité 276 est disposé entre la face axiale du perçage 272 et la face axiale externe 275 du manchon 274 qui est située en regard de cette face du perçage.

De l'autre côté du distributeur 216, la deuxième extrémité axiale 274B du manchon 274 est raccordée de manière étanche à la paroi d'un perçage axial 278 qui traverse le carter ou, plus précisément, sa partie 202B. Un joint d'étanchéité 280 est également disposé entre l'extrémité 274B et la partie 202B du carter. Ainsi, l'espace interne du moteur est étanché vis-à-vis du passage axial 270. Le manchon 274 peut être calé axialement par coopération en butée de son extrémité 274A avec un épaulement 273 qui équipe le perçage 272 du bloc-cylindres. De l'autre côté, un calage en butée peut être réalisé par tout moyen approprié utilisant, par exemple, l'épaulement 274C de la face axiale externe du manchon.

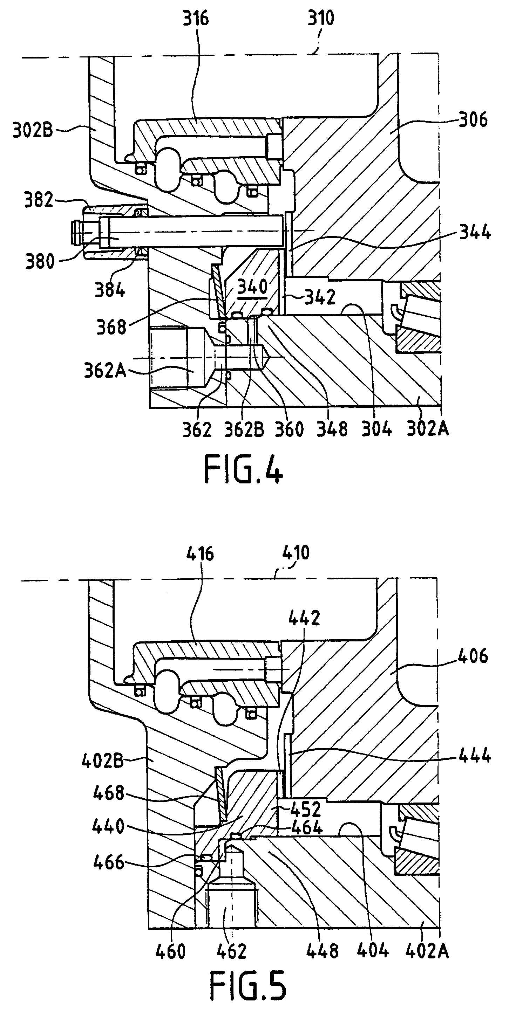

Sur la figure 4, les références numériques sont les mêmes que sur la figure 1, augmentées de 300. Cette figure 4 montre une disposition avantageuse dans laquelle on utilise les dents du crabot de freinage pour mesurer la vitesse de rotation du rotor du moteur par rapport à son stator. Pour ce faire, un détecteur de vitesses 380 est logé dans un élément du stator du moteur et fait face à celle des première et deuxième séries de dents qui est solidaire en rotation du rotor du moteur.

Dans l'exemple représenté, le bloc-cylindres appartient au rotor et c'est donc à la deuxième série de dents 344 que fait face le détecteur 380 pour mesurer la vitesse de défilement des dents de cette deuxième série. Le détecteur est logé dans un perçage pratiqué dans la partie 302B du carter du moteur. Le détecteur 380 est calé à l'aide d'une bague 382, l'étanchéité du perçage dans lequel il est logé étant assurée à l'aide de joints 384. A son extrémité située hors du carter du moteur, il peut être raccordé à des câbles électriques. Il s'agit par exemple d'un système optique ou encore d'un système électromagnétique. De manière générale, tout système apte à transmettre une impulsion à chaque passage d'une dent devant son capteur pour permettre le comptage des dents qui défilent peut être prévu.

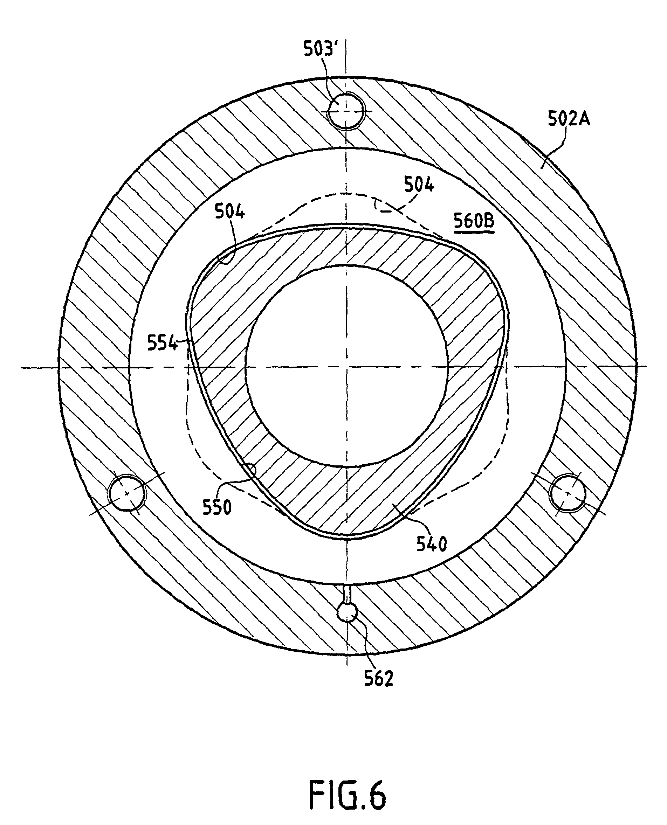

Les références utilisées sur la figure 5 sont les mêmes que celles de la figure 1, augmentées de 400. Dans les figures précédentes, par exemple sur la figure 3, le conduit de défreinage s'ouvrait à l'extérieur du moteur sur une face sensiblement radiale de ce dernier. Ainsi, le conduit 362 de la figure 4 comporte un premier tronçon axial 362A raccordé à un deuxième tronçon 362B qui est radial et qui débouche dans la chambre de défreinage 360. Dans la variante de la figure 5, le conduit de défreinage comporte un unique tronçon radial 462, qui traverse le prolongement axial 448 de la came 404. Cette disposition permet, dans le cas d'un moteur à carter fixe, de simplifier l'usinage du conduit de défreinage, dans la mesure où il est possible de raccorder les conduites externes de défreinage à l'extrémité de ce conduit qui débouche sur une face axiale de la partie 402A du carter du moteur.

Sur la figure 1, on voit que le système de freinage comprend des moyens de défreinage mécanique qui comportent un taraudage axial 90 qui est réalisé dans le piston de freinage 40 et qui est ouvert sur une face 41 sensiblement radiale de ce piston, située du côté opposé au bloc-cylindres, c'est-à-dire du côté opposé aux premières dents 42 du crabot. Ces moyens de défreinage comprennent également un perçage axial 92 qui est pratiqué dans une partie sensiblement radiale du carter du moteur située en regard du piston de freinage. En l'espèce, ce perçage 92 est réalisé dans une portion en forme de bride radiale du couvercle de distribution 2B. Le perçage 92 est aligné avec le taraudage axial 90. Pour assurer le défreinage, une vis de défreinage (non représentée) est susceptible d'être introduite dans le perçage axial 92 jusque dans le taraudage 90 et, dans la mesure où la tête de cette vis est maintenue en butée à l'extérieur du perçage 92, le fait de la tourner dans le sens du vissage à l'intérieur du taraudage 90 a pour effet de rappeler le piston de freinage 40 dans le sens allant à l'encontre de l'action de la rondelle ressort 68, c'est-à-dire dans le sens du défreinage. En situation usuelle de fonctionnement du moteur, le perçage 92 est fermé par exemple à l'aide d'un bouchon 94. De manière alternative, la vis de défreinage peut être déjà introduite dans ce perçage tout en étant maintenue dans une position reculée, dans laquelle son extrémité libre ne dépasse pas au-delà de l'extrémité du perçage 92 qui fait face au taraudage 90, à l'aide de tout moyen approprié, par exemple une entretoise. Les moyens de défreinage mécanique comprennent au moins deux ensembles de défreinage de ce type, espacés circonférentiellement.

On a indiqué précédemment que le profil inteme du premier tronçon de couplage est analogue au profil de réaction de l'organe de réaction et que le profil externe du deuxième tronçon de couplage est adapté au profil interne pour assurer une transmission du couple de freinage. Par exemple, en première variante, le profil interne peut être identique au profil de réaction et le profil externe être exactement conjugué du profil interne. Lorsque les profils interne et exteme servent non seulement au passage du couple de freinage mais également à délimiter la chambre de défreinage comme dans la figure 1, il faut que les profits interne et externe soient exactement conjugués pour assurer l'étanchéité à l'aide d'un joint simple, reproduisant par exemple les ondulations de la came et ayant une épaisseur radiale constante.

On peut toutefois obtenir cette fonction sans que le profil interne du premier tronçon de couplage 147 soit le prolongement exact du profil de came. La figure 6 est une coupe extrêmement schématique illustrant une telle possibilité. Sur cette figure, la surface de came 504 présente par exemple six ondulations régulièrement réparties sur son pourtour et réalisées par un usinage de la périphérie interne de la partie 502A du carter. En revanche, le profil interne 550 du premier tronçon de couplage peut ne comporter que trois ondulations, un lobe sur deux de la came n'étant pas reproduit. Le piston de freinage 540 présente un profil exteme 554 qui est le conjugué exact du profil 550, de sorte que l'étanchéité entre les deux surfaces constituées par les profils interne 550 et externe 554 peut être assurée à l'aide d'un joint d'étanchéité d'épaisseur constante (pour la clarté, on n'a pas représenté ce joint et les profils 550 et 554 sont dessinés écartés l'un de l'autre). Pour simplifier, on n'a pas représenté sur la figure 6 les éléments internes du moteur tels que le distributeur qui se trouve à l'intérieur du piston de freinage. De même, dans la partie 502A du carter, on a simplement indiqué les alésages 503' pour des vis de fixation des deux parties du carter et le conduit de défreinage 562.

La disposition de la figure 6 présente un intérêt particulier puisqu'elle permet, avec un usinage simple du profil de réaction et des profils interne et externe qui transmettent le couple de freinage, ainsi que du piston de freinage 540, d'augmenter la surface de défreinage. Cette surface est en effet définie par la surface de la région dans laquelle les deux faces radiales (60A et 60B sur la figure 1) de la chambre de défreinage, respectivement ménagées sur le prolongement axial du carter et sur le piston de freinage se trouvent en regard l'une de l'autre. En fait, dans la conformation de la figure 6, cette surface de défreinage est égale à la surface de la face 560B de la chambre de défreinage. On voit que cette surface est nettement supérieure à la valeur qu'aurait la surface de défreinage si le profil interne était identique au profil de came, auquel cas il faudrait déduire de la surface de la face 560B les portions grisées sur la figure 6 correspondant à la moitié des lobes de came. En augmentant ainsi la surface de défreinage, on augmente l'efficacité du fluide de défreinage. Le défreinage effectif peut donc être obtenu pour une pression de fluide moins importante ou, plutôt, un défreinage plus important peut être obtenu pour une pression de fluide donnée, ce qui autorise l'utilisation d'un ressort exerçant un effort plus important et permet ainsi d'obtenir un couple de freinage plus élevé.

De la figure 6, on peut retenir que les profils de couplage de la couronne de couplage et du piston de freinage sont avantageusement formés par des ondulations, les parties en creux des ondulations du profil de couplage de la face interne de couplage de la couronne s'étendant axialement en correspondance avec certaines, au moins, des parties en creux des ondulations de l'organe de réaction. En d'autres termes, on "utilise" au moins certains lobes de came pour réaliser les profils de couplage.

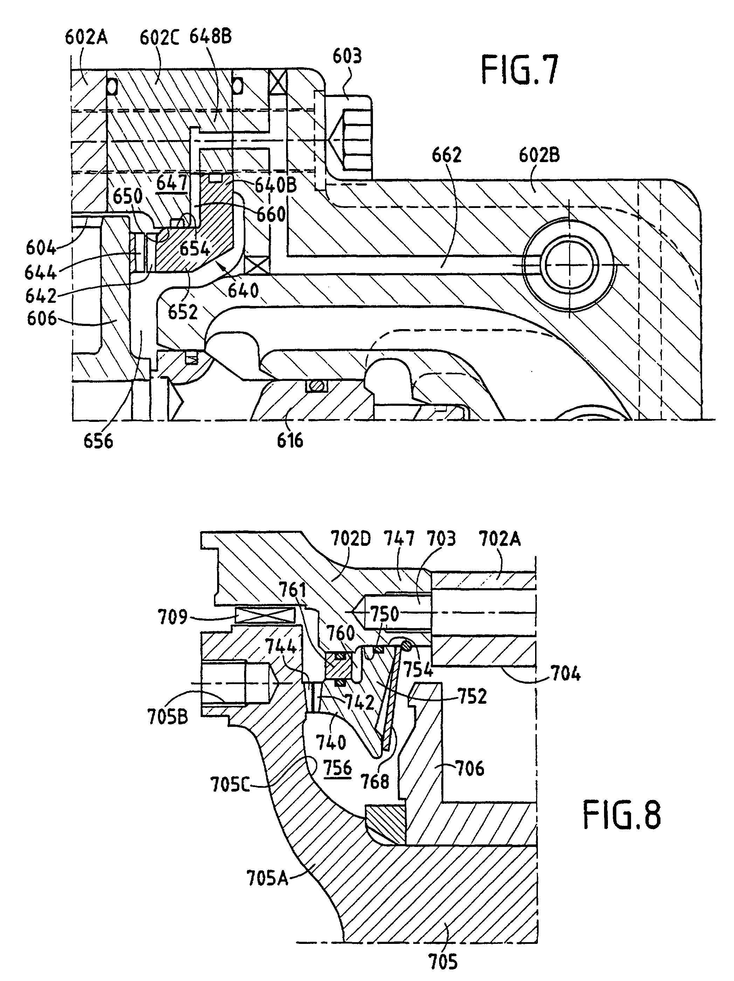

Sur la figure 7, le carter du moteur est en trois parties, respectivement 602A (dont la périphérie interne forme la came ondulée 604), 602B (couvercle de distribution) et 602C. Cette partie 602C est la couronne de couplage dont un tronçon axial forme un tronçon de couplage 647, la périphérie interne de ce tronçon délimitant le profil interne de couplage 650. Le piston de freinage 640 comporte quant à lui un deuxième tronçon de couplage 652, dont la face axiale externe 654 présente le profil externe de couplage qui, en coopérant avec le profil 650 permet de caler le piston en rotation par rapport à la couronne 602C. Cette dernière est disposée entre la partie 602A du carter qui porte la came et le couvercle de distribution 602B. La couronne 602C s'étend ainsi autour d'une partie marginale du bloc-cylindres 606 située du côté de sa face radiale qui est tournée vers le distributeur 616 (sur laquelle se trouvent les dents 644), et autour de la partie du distributeur voisine du bloc-cylindres.

Le piston de freinage 640 est disposé dans une cavité annulaire 656 ménagée autour du distributeur, globalement dans la même conformation que pour la figure 1.

Contrairement à la figure 1, la couronne 602C n'est pas réalisée monobloc avec la partie du carter qui porte la came. Elle constitue donc une pièce distincte qui est fixée aux autres parties du carter par les vis 603 de fixation du carter, ces vis étant naturellement dimensionnées pour supporter les couples élevés qui s'exercent sur l'assemblage des différentes parties du carter lors du fonctionnement du moteur. Cette disposition permet, tout en assurant la robustesse de l'ensemble de freinage, de disposer le même ensemble de freinage sur divers types de moteurs (qui se différencient par exemple les uns des autres par le nombre de lobes de la came ou, plutôt, par l'amplitude des ondulations de la came). Comme pour la figure 1, les profils de couplage des faces 650 et 654 sont avantageusement formés par des ondulations.

Comme pour la figure 1, la chambre de défreinage 660 est formée entre deux portions axiales étagées de la couronne de couplage 602C et deux portions axiales étagées du piston 640. La périphérie interne de la portion axiale 648B de la couronne de couplage et la périphérie externe de la portion 640B du piston qui coopèrent entre elles peuvent être cylindriques. Toutefois, on peut également choisir de les réaliser de manière ondulée pour qu'elles assurent le couplage en rotation du piston 640 avec la couronne 602C. Dans ce cas, la périphérie exteme du tronçon axial du piston voisin des premiers moyens de freinage (dents 642 que porte ce piston) et la périphérie interne de la portion de la couronne 602C qui coopère avec ladite périphérie externe peuvent être cylindriques.

Le conduit de défreinage 662 peut être réalisé pour partie dans le couvercle de distribution 602B et pour partie dans la couronne de couplage 602C

Sur la figure 8, on a représenté en coupe axiale la partie du moteur située du côté du bloc-cylindres qui est opposé au distributeur. On voit ainsi une portion du bloc-cylindres 706, une portion de la partie de carter 702A dont la périphérie interne forme la came 704, une portion d'une autre partie du carter 702D qui est assemblée à la partie 702A par des vis d'assemblage du carter 703, ainsi qu'un arbre 705 qui est solidaire en rotation du bloc-cylindres 706 par tous moyens appropriés, par exemple des cannelures. Cet arbre 705 comporte une bride radiale 705A qui est supportée en rotation par rapport à la périphérie interne de la partie 702D du carter par un palier 709 qui est représenté de manière très schématique, ce palier pouvant comprendre tout type d'organes de roulement, par exemple des billes ou des roulements coniques. La bride 705A de l'arbre 705 présente des taraudages 705B qui permettent de fixer sur elle un objet à entraîner en rotation.

Le piston de frein 740 est disposé dans un espace annulaire 756 qui, cette fois, est ménagé entre la partie 702D du carter et l'arbre 705, et qui est délimité axialement par la paroi radiale du bloc-cylindres opposée au distributeur (non représenté) et par la face 705C sensiblement radiale de la bride 705A qui est tournée vers cette paroi radiale du bloc-cylindres. Les premiers moyens de freinage 742 (première série de dents) sont solidaires de la face active 740 du piston, cette face active faisant face à la face 705C de la bride 705A. Les deuxièmes moyens de freinage 744 (deuxième série de dents) sont quant à eux solidaires de cette face 705C. Le piston de freinage 740 est constamment sollicité dans le sens du freinage (c'est-à-dire dans le sens dans lequel il va en s'éloignant du bloc-cylindres 706) par un ressort 768 constitué par une rondelle belleville.

La couronne de couplage est constituée par le tronçon axial 747 de la partie de carter 702D qui est voisine de la partie 702A. Pour solidariser le piston en rotation avec le carter, la périphérie interne 750 de cette couronne et la périphérie externe 754 du tronçon de couplage 752 de piston 740 présentent des profils de couplage formant de préférence des ondulations. Ces profils sont étanchés l'un par rapport à l'autre puisqu'ils délimitent la chambre de défreinage 760. De l'autre côté, vers le bloc-cylindres, cette chambre 760 est délimitée par les périphéries axiales cylindriques en regard du piston et de la partie de carter 702D, qui sont également étanchées l'une par rapport à l'autre.

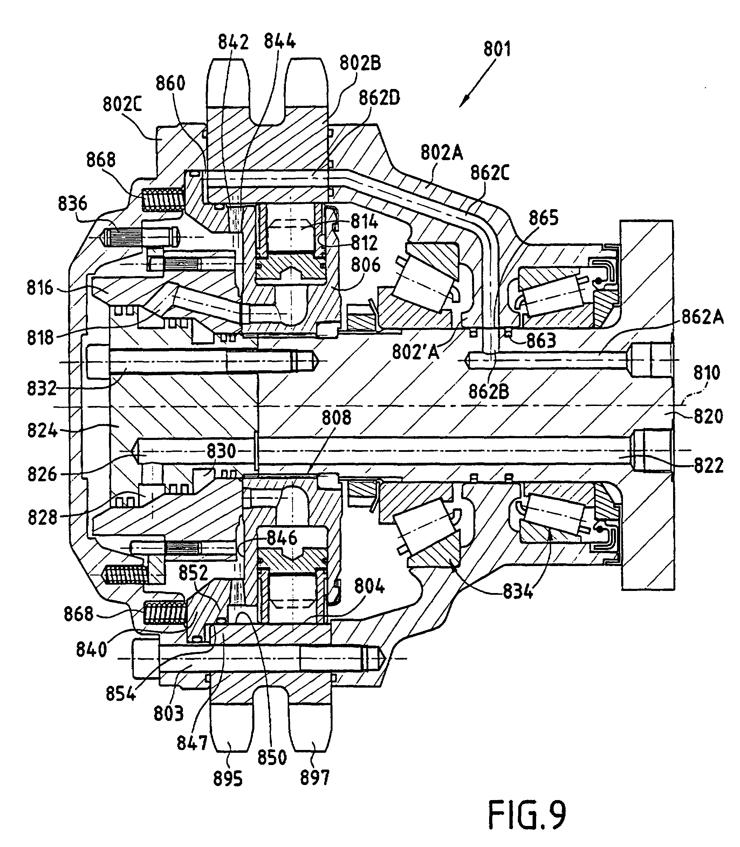

Les figures 1 à 8 montraient l'invention appliquée à un moteur à carter fixe. La figure 9 montre que l'invention s'applique également à un moteur à carter tournant. Plus précisément, ce moteur 801 comporte
- un carter tournant en trois parties 802A, 802B et 802C assemblées par des vis 803 ;
- une came de réaction ondulée 804, ménagée sur la périphérie interne de la partie 802B du carter ;
- un bloc-cylindres 806, qui présente un alésage central 808 et qui est fixe vis-à-vis de la rotation autour de l'axe 810, ce bloc-cylindres comportant une pluralité de cylindres radiaux 812 susceptibles d'être alimentés en fluide sous pression, à l'intérieur desquels sont montés coulissants des pistons 814 ;
- un distributeur interne de fluide 816, solidaire du carter vis-à-vis de la rotation autour de l'axe 810, c'est-à-dire qu'il tourne avec le carter par rapport au bloc-cylindres, et comportant des conduits de distribution 818 susceptibles de communiquer avec les cylindres 812 ; et
- un premier tronçon de noyau central 820 qui est fixe et qui est percé de conduits d'alimentation et d'échappement de fluide 822, ainsi qu'un deuxième tronçon de noyau central 824 qui, par des conduits intermédiaires 826, met les conduits d'alimentation ou d'échappement de fluide en communication avec des gorges 828 et 830 ménagés entre sa périphérie externe et la périphérie interne du distributeur de fluide 816.

Ce deuxième tronçon 824 est solidarisé avec le premier tronçon 820 à l'aide de vis 832. Le bloc-cylindres est solidarisé en rotation avec ces tronçons 820 et 824 à l'aide de cannelures que présente son alésage 808 et avec lesquelles coopèrent des cannelures complémentaires réalisées sur la périphérie externe des tronçons 820 et 824. La rotation du carter est supportée par des paliers 834 sur la périphérie axiale du tronçon de noyau 820. Le distributeur 816 est solidarisé en rotation avec la partie 802C du carter à l'aide d'un système à pion et encoche 836.

Le système de freinage qui équipe ce moteur est analogue à celui des figures précédentes, puisque l'on y reconnaît le premier tronçon de couplage 847 réalisé sur un prolongement axial de l'organe de réaction et le piston de freinage 840 qui présente le deuxième tronçon de couplage 852. Le passage du couple de freinage, c'est-à-dire le couplage en rotation entre le piston et l'organe de réaction, est assuré par la coopération entre le profil interne 850 du premier tronçon de couplage 847 et le profil externe 854 du deuxième tronçon de couplage 852.

Dans l'exemple représenté sur la figure 9, les surfaces délimitées par ces profils interne et externe servent également à délimiter la chambre de défreinage 860, de sorte que les profils interne et externe sont conjugués. Bien entendu, on pourrait prévoir les variantes évoquées en référence aux figures précédentes. Les premiers moyens de freinage sont constitués par une première série de dents 842 qui sont montées sur une extrémité du piston de freinage 840, tandis que les deuxièmes moyens de freinage sont constitués par une deuxième série de dents 844 qui sont montées sur une face d'extrémité 846 du bloc-cylindres situé sous le prolongement axial dans lequel est ménagé le premier tronçon de couplage.

La chambre de défreinage 860 est alimenté en fluide sous pression par un conduit de défreinage comprenant un premier tronçon 862A qui est disposé axialement dans le tronçon de noyau central 820, un deuxième tronçon 862B, qui est disposé radialement et qui prend dans ce tronçon axial pour déboucher dans la face axiale externe du tronçon de noyau central 820, et des troisième et quatrième tronçons 862C et 862D. Une face axiale formée dans une bride transversale 802'A de la partie de carter 802A se trouve en regard de la région de la périphérie axiale du tronçon de noyau 820 dans laquelle débouche le conduit 862B. Une chambre de communication 865 est ainsi ménagée, cette chambre étant étanchée de part et d'autre de l'extrémité du conduit 862B par des joints d'étanchéité 863. Le tronçon de conduit 862C est pratiqué dans la partie 802A du carter et débouche dans la chambre 865 pour être mis en communication permanente avec le conduit 862B. Le tronçon 862C est enfin raccordé au tronçon axial 862D qui est ménagé dans la partie 802B du carter, ce conduit 862D s'ouvrant dans la chambre de défreinage 860. Pour solliciter en permanence le piston 840 dans le sens du freinage, des moyens de rappel élastiques, par exemple constitués par des ressorts hélicoïdaux 868 sont prévus.

On remarque que la périphérie externe de la partie 802B du carter présente deux pignons, respectivement 895 et 897. Ces pignons peuvent venir en prise avec des chaînes permettant par exemple d'utiliser le moteur 801 pour l'entraînement de roues de chargeuse compacte disposées en tandem.

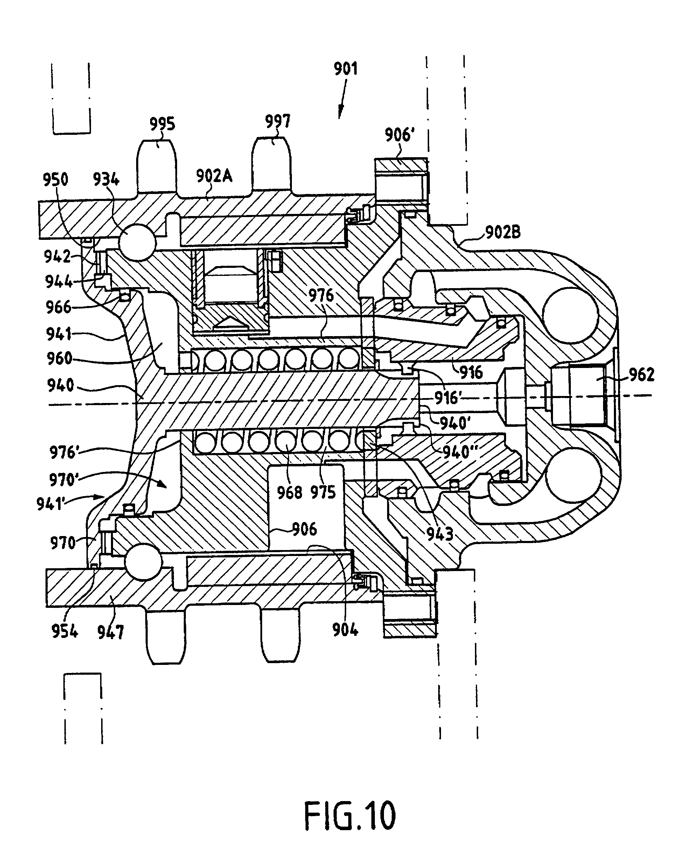

La figure 10 montre également l'invention appliquée à un moteur 901 à carter tournant dont, par exemple, le carter porte des pignons 995 et 997. Le bloc-cylindres 906 est fixe en rotation et peut être fixé au châssis d'un véhicule par une bride 906' qu'il comporte et qui sort du carter. Ce carter comporte une première partie 902A qui est disposée autour du bloc-cylindres, jusqu'à cette bride 906', et une deuxième partie 902B qui forme le couvercle de distribution et qui peut également être fixé au châssis d'un véhicule. Le carter est supporté en rotation par rapport au bloc-cylindres par des roulements 934, par exemple des roulements à billes.

Comme dans le cas de la figure 8, le système de frein est disposé du côté du bloc-cylindres opposé au distributeur 916. Le piston de freinage est formé par un arbre 940 qui comporte une bride sensiblement radiale 941. L'arbre 940 traverse de part en part le bloc-cylindres 906 et comporte une extrémité qui s'étend dans un perçage axial central du distributeur 916.

La couronne de couplage 947 est formée par une portion d'extrémité de la partie 902A du carter et est réalisée monobloc avec cette dernière. La partie 902A porte la came 904. La surface interne de couplage est formée sur la périphérie interne 950 de cette couronne. La surface externe de couplage 954 est quant à elle formée sur une surface axiale de l'extrémité de la bride 941. Ces surfaces 950 et 954 présentent des profils de couplage, réalisés de préférence par les ondulations, qui permettent de solidariser l'arbre 940 en rotation avec le carter.

On remarque qu'à son extrémité 940' qui s'étend à l'intérieur du distributeur 916, l'arbre 940 présente des cannelures 940" avec lesquelles coopèrent des cannelures 916' du distributeur pour solidariser ce dernier en rotation avec l'arbre et donc avec le carter.

Les premiers moyens de freinage (les dents 942) sont formés sur la face radiale de la bride 941 qui est tournée vers le bloc-cylindres. Les deuxièmes moyens de freinage (les dents 944) sont formés sur la face radiale du bloc-cylindres qui est tournée vers la bride 941.

Plus précisément, les deuxièmes moyens de freinage 944 sont formés sur la face radiale de l'extrémité d'une extension annulaire 970 du bloc-cylindres avec lequel coopèrent les paliers de roulement 934. La chambre de défreinage 960 est réalisée entre la bride 941 et le bloc-cylindres 906. En effet, un renfoncement 970' est ménagé dans la face radiale du bloc-cylindres opposée au distributeur, du fait de la présence de l'extension axiale annulaire 970.

La bride 941 présente quant à elle un décrochement 941' qui pénètre partiellement dans ce renfoncement 970'. La périphérie interne de l'extension annulaire 970 et la périphérie externe du décrochement 941' s'étendent axialement et sont étanchées l'une par rapport à l'autre par des joints 966. Cette disposition permet le coulissement axial du piston 940 par rapport au bloc-cylindres tout en délimitant la chambre 960.

Un conduit de défreinage 962 qui s'ouvre dans le couvercle de distribution 902B permet d'alimenter la chambre 960. Ce conduit de défreinage débouche dans le perçage central du distributeur qui est naturellement étanché par rapport à l'extérieur et, dans la mesure où l'arbre 940 n'est pas étanché par rapport au perçage central du bloc-cylindres (un ou plusieurs perçages de communication peuvent même être prévus), il permet ainsi d'alimenter la chambre 960 qui est en communication permanente avec le perçage annulaire du distributeur.

Un espace annulaire 975 est ménagé entre l'arbre 940 et le perçage 976 du bloc-cylindres dans lequel il est inséré. Un ressort hélicoïdal 968 est disposé dans cet espace annulaire, dans lequel il est en appui entre, d'une part, une paroi radiale 976' du perçage 976 et, d'autre part, une bride 943 qui est calée sur l'arbre 940, par exemple, par un circlips. Le ressort rappelle en permanence le piston de freinage dans le sens du freinage.

Dans l'un quelconque des modes de réalisation présentés ci-dessus, la chambre de défreinage peut être réalisée entre une première portion axiale du piston et une première portion axiale de la couronne de couplage située en regard, ayant des ondulations de couplage, et une deuxième portion axiale du piston et une deuxième portion axiale en regard, ayant également des ondulations, les deuxièmes portions axiales étant décalées par rapport aux premières.

## Revendications

1. Moteur hydraulique (1 ; 801 ; 901) comprenant :
- un carter (2A, 2B ; 102A, 102B ; 202B ; 302A, 302B ; 402A, 402B ; 602A, 602B, 602C ; 702A, 702D ; 802A, 802B, 802C ; 902A, 902B);
- un organe de réaction, solidaire du carter et présentant une périphérie interne (4 ; 104 ; 304 ; 404 ; 504 ; 604 ; 704 ; 804 ; 904) qui délimite un profil de réaction ;
- un bloc-cylindres (6 ; 106 ; 206 ; 306 ; 406 ; 606), qui est monté à rotation relative autour d'un axe de rotation (10 ; 110 ; 210 ; 310 ; 410 ; 810) par rapport audit organe de réaction et qui comporte une pluralité d'ensembles de cylindres (12 ; 812) et de pistons (14 ; 814), disposés radialement par rapport à l'axe de rotation et susceptibles d'être alimentés en fluide sous pression ;
- un distributeur interne de fluide (16 ; 116 ; 216 ; 316 ; 416 ; 616 ; 816 ; 916), solidaire du carter vis-à-vis de la rotation autour de l'axe de rotation et comportant des conduits de distribution (18 ; 818) susceptibles de mettre les cylindres en communication avec des conduits d'alimentation et d'échappement de fluide (32, 34 ; 822) ;
- un système de freinage comprenant des premiers et des deuxièmes moyens de freinage (42, 44 ; 142, 144 ; 342, 344 ; 442 ; 444 ; 642, 644 ; 742, 744 : 842, 844 ; 942, 944) respectivement solidaires du carter et du bloc-cylindres vis-à-vis de la rotation autour de l'axe de rotation, un piston de freinage (40 ; 140 ; 340 ; 440 ; 540 ; 640 ; 740 ; 840 ; 940), présentant une face active de freinage sensiblement radiale dont est solidaire un organe de freinage, ce piston étant apte à occuper une position de freinage dans laquelle il sollicite les premiers et deuxièmes moyens de freinage en engagement de freinage pour empêcher la rotation relative du bloc-cylindres et du carter et une position de défreinage, ainsi que des moyens (68, 60 ; 168, 160 ; 368, 360 ; 468, 460 ; 660 ; 768, 760 ; 868, 860 ; 968, 960) pour déplacer le piston de freinage entre lesdites positions de freinage et de défreinage,
**caractérisé en ce que** le piston de freinage (40 ; 140 ; 340 ; 440 ; 540 ; 640 ; 740 ; 840 ; 940) est solidaire du carter vis-à-vis de la rotation autour de l'axe de rotation et l'organe de freinage qui est solidaire de la face active de freinage de ce piston est un premier organe de freinage (42 ; 142 ; 342 ; 442 ; 642 ; 742 ; 842 ; 942) appartenant aux premiers moyens de freinage.

2. Moteur selon la revendication 1, **caractérisé en ce qu'**il comporte une couronne de couplage (47, 48 ; 147, 148 ; 348 ; 448 ; 602C ; 702D ; 947), qui forme une partie du carter et qui présente une face axiale interne (50 ; 150 ; 650 ; 750 ; 850 ; 950) avec laquelle coopère une face axiale externe (54 ; 154 ; 654 ; 754 ; 854 ; 954) du piston de freinage pour caler ledit piston en rotation par rapport au carter, lesdites faces axiales interne et externe ayant des profils de couplage adaptés à cet effet.

3. Moteur selon la revendication 2, **caractérisé en ce que** la couronne de couplage (47, 48 ; 148) est constituée par un prolongement axial de l'organe de réaction qui fait corps avec ce dernier.

4. Moteur selon la revendication 2 ou 3, dans lequel le profil de réaction (4 ; 104 ; 304 ; 404 ; 504 ; 604 ; 704 ; 804 ; 904) de l'organe de réaction est formé par des ondulations, **caractérisé en ce que** les profils de couplage (50, 54 ; 150, 154 ; 650 , 654 ; 750, 754 ; 850, 854 ; 950 , 954) sont également formés par des ondulations, les parties en creux des ondulations du profil de couplage de la face interne de couplage s'étendant axialement en correspondance avec certaines, au moins, des parties en creux des ondulations de l'organe de réaction.

5. Moteur selon l'une quelconque des revendications 1 à 4, **caractérisé en ce qu'**un deuxième organe de freinage (44 ; 144 ; 344 ; 444 ; 644 ; 844 ; 944) appartenant aux deuxièmes moyens de freinage est solidaire d'une face d'extrémité du bloc-cylindres (6 ; 106 ; 306 ; 406 ; 606 ; 806 ; 906) qui s'étend en regard de la face active du piston de freinage.

6. Moteur selon l'une quelconque des revendications 1 à 4, **caractérisé en ce qu'**un deuxième organe de freinage (744) appartenant aux deuxièmes moyens de freinage est solidaire d'une bride (705A) qui équipe un arbre (705) calé en rotation par rapport au bloc-cylindres (706).

7. Moteur selon l'une quelconque des revendications 1 à 6, **caractérisé en ce que** les premiers et deuxièmes moyens de freinage comprennent respectivement une première (42 ; 142 ; 342 ; 442 ; 642 ; 742 ; 842 ; 942) et une deuxième (44 ; 144 ; 344 ; 444 ; 644 ; 744 ; 844 ; 944) série de dents d'un crabot, la première série de dents étant solidaire de la face active du piston de freinage.

8. Moteur selon l'une quelconque des revendications 1 à 7, **caractérisé en ce que** les moyens pour déplacer le piston de freinage entre la position de freinage et la position de défreinage comprennent une chambre de défreinage (60 ; 160 ; 360 ; 460 ; 660 ; 760 ; 860 ; 960) susceptible d'être alimentée en fluide sous pression, ladite chambre ayant une paroi sensiblement radiale qui est formée par une face du piston, tournée du même côté que la face active de ce dernier et qui est décalée axialement par rapport à cette face active.

9. Moteur selon les revendications 2 et 8, **caractérisé en ce que** la chambre de défreinage est formée entre deux portions axiales étagées (48A, 48B ; 148A, 148B) appartenant à la couronne de couplage et deux portions axiales étagées (40A, 408 ; 140A, 140B) appartenant au piston de freinage, un premier joint d'étanchéité (64 ; 164) étant disposé entre la première portion axiale de la couronne et la première portion axiale du piston de freinage situées en regard l'une de l'autre, tandis qu'un deuxième joint d'étanchéité (66 ; 166) est disposé entre la deuxième portion axiale de la couronne et la deuxième portion axiale du piston de freinage situées en regard l'une de l'autre.

10. Moteur selon la revendication 9, **caractérisé en ce que** les portions axiales (148A, 148B ; 140A, 140B) de la couronne de couplage et du piston de freinage (140) entre lesquelles est ménagée la chambre de défreinage (160) sont annulaires, la première portion axiale (148A) de la couronne étant raccordée à la face axiale interne de couplage de ladite couronne par un décrochement (148C), tandis que la première portion axiale (140A) du piston de freinage (140) est raccordée à la face axiale externe de couplage dudit piston par un épaulement.

11. Moteur selon la revendication 9, **caractérisé en ce que** la face axiale interne de couplage (50 ; 150 ; 650 ; 750 ; 850 ; 950) et la face axiale externe de couplage (54 ; 154 ; 654 ; 754 ; 854 ; 954) sont respectivement formées sur la première portion axiale de la couronne de couplage (47, 48 ; 147, 148 ; 348 ; 448 ; 602C ; 702D ; 947) et sur la première portion axiale du piston de freinage (40 ; 140 ; 340 ; 440 ; 540 ; 640 ; 740 ; 840 ; 940) et **en ce que** les profils de couplage sont des profils ondulés.

12. Moteur selon l'une quelconque des revendications 1 à 11, **caractérisé en ce que** le système de freinage comprend des moyens de défreinage mécanique ayant au moins deux ensembles comportant, chacun, un taraudage axial (90), réalisé dans le piston de freinage (40) et ouvert sur une face (41) sensiblement radiale de ce piston opposée aux premiers moyens de freinage (42), ainsi qu'un perçage axial (92), pratiqué dans une partie sensiblement radiale (2B) du carter située en regard du piston de freinage (40) et aligné avec le taraudage axial (50) dudit piston, lesdits ensembles comportant chacun, en outre, une vis de défreinage, susceptible d'être introduite dans le perçage axial du carter, jusque dans le taraudage axial du piston de freinage.

13. Moteur selon la revendication 7 et l'une quelconque des revendications 1 à 12, **caractérisé en ce qu'**il comporte des moyens pour mesurer la vitesse de rotation du moteur comprenant un détecteur de vitesse (380), logé dans un élément (302B) du stator du moteur et faisant face à celle (344) des première et deuxième séries de dents qui est solidaire en rotation du rotor (306) du moteur.

14. Moteur selon l'une quelconque des revendications 1 à 13, **caractérisé en ce qu'**il est traversé de part en part par un passage axial (270) qui est délimité, dans la région du distributeur (216), par un manchon cylindrique creux (274) dont une première extrémité axiale (274A), située d'un premier côté du distributeur, est raccordée de manière étanche à la paroi d'un perçage axial (272) qui traverse le bloc-cylindres (206) et qui est aligné avec ce manchon et dont une deuxième extrémité axiale (274B), située de l'autre côté du distributeur (216), est raccordée de manière étanche à la paroi d'un perçage axial (278) qui traverse le carter (202B).

## Patentansprüche

1. Hydromotor (1; 801; 901) mit:
- einem Gehäuse (2A, 2B; 102A, 102B; 202B; 302A, 302B; 402A, 402B; 602A, 602B, 602C; 702A, 702D; 802A, 802B, 802C; 902A, 902B);
- einem fest mit dem Gehäuse verbundenen Rückkopplungsorgan mit einem inneren Umfang (4; 104; 304; 404; 504; 604; 704; 804; 904), der ein Rückkopplungsprofil begrenzt;
- einem Motorblock (6; 106; 206; 306; 406; 606), der so angebracht ist, daß er in bezug auf das genannte Rückkopplungsorgan eine relative Drehung um eine Drehachse (10; 110; 210; 310; 410; 810) ausführen kann, und der eine Vielzahl von Zylinder(12; 812) und Kolbeneinheiten (14; 814) umfaßt, die in bezug auf die Drehachse radial angeordnet sind und mit Druckflüssigkeit gespeist werden können;
- einem internen Flüssigkeitsverteiler (16; 116; 216; 316; 416; 616; 816; 916), der gegenüber der Drehung um die Drehachse eine feste Einheit mit dem Gehäuse bildet und Verteilungsleitungen (18; 818) umfaßt, die Zylinder mit Flüssigkeitszu- und -ableitungen (32, 34; 822) zu verbinden vermögen;
- einem Bremssystem mit ersten und zweiten Bremsmitteln (42, 44; 142, 144; 342, 344; 442, 444; 642, 644; 742, 744; 842, 844; 942, 944), die gegenüber der Drehung um die Drehachse jeweils eine feste Einheit mit dem Gehäuse und dem Motorblock bilden, einem Bremskolben (40; 140; 340; 440; 540; 640; 740; 840; 940), der eine im wesentlichen radiale aktive Bremsfläche aufweist, mit der ein Bremsorgan fest verbunden ist, wobei dieser Kolben eine Bremsstellung einnehmen kann, in der er die ersten und zweiten Bremsmittel so beansprucht, daß sie in Eingriff sind, um die relative Drehung des Motorblocks und des Gehäuses zu verhindern, oder sich in einer gelösten Stellung befinden kann, sowie Mitteln (68, 60; 168, 160; 368, 360; 468, 460; 660; 768, 760; 868, 860; 968, 960) zur Verlagerung des Bremskolbens zwischen der Bremsstellung und der gelösten Stellung,
**dadurch gekennzeichnet, daß** der Bremskolben (40; 140; 340; 440; 540; 640; 740; 840; 940) gegenüber der Drehung um die Drehachse eine feste Einheit mit dem Gehäuse bildet, und daß es sich bei dem Bremsorgan, das fest mit der aktiven Bremsfläche dieses Kolbens verbunden ist, um ein erstes Bremsorgan (42; 142; 342; 442; 642; 742; 842; 942) handelt, das zu den ersten Bremsmitteln gehört.

2. Motor nach Anspruch 1,
**dadurch gekennzeichnet, daß** er einen Kopplungsring (47, 48; 147, 148; 348; 448; 602C; 702D; 947) umfaßt, der einen Teil des Gehäuses bildet und eine axiale innere Fläche (50; 150; 650; 750; 850; 950) aufweist, mit der eine axiale äußere Fläche (54; 154; 654; 754; 854; 954) des Bremskolbens zusammenwirkt, um die Drehung dieses Kolbens in bezug auf das Gehäuse zu blockieren, wobei diese axiale innere bzw. äußere Fläche ein zu diesem Zweck geeignetes Kopplungsprofil aufweist.

3. Motor nach Anspruch 2,
**dadurch gekennzeichnet, daß** der Kopplungsring (47, 48; 148) aus einer axialen Verlängerung des Rückkopplungsorgans besteht, mit dem diese eine Einheit bildet.

4. Motor nach Anspruch 2 oder 3, bei dem das Rückkopplungsprofil (4; 104; 304; 404; 504; 604; 704; 804; 904) des Rückkopplungsorgans aus Wellen besteht,
**dadurch gekennzeichnet, daß** die Kopplungsprofile (50, 54; 150, 154; 650, 654; 750, 754; 850, 854; 950, 954) ebenfalls aus Wellen bestehen, wobei sich die Vertiefungen der Wellen des Kopplungsprofils der inneren Kopplungsfläche axial erstrecken und wenigstens an einige der Vertiefungen der Wellen des Rückkopplungsorgans anschließen.

5. Motor nach einem der Ansprüche 1 bis 4,
**dadurch gekennzeichnet, daß** ein zweites Bremsorgan (44; 144; 344; 444; 644; 844; 944), das zu den zweiten Bremsmitteln gehört, eine feste Einheit mit einer Endfläche des Motorblocks (6; 106; 306; 406; 606; 806; 906) bildet, die sich gegenüber der aktiven Fläche des Bremskolbens erstreckt.

6. Motor nach einem der Ansprüche 1 bis 4,
**dadurch gekennzeichnet, daß** ein zweites Bremsorgan (744), das zu den zweiten Bremsmitteln gehört, eine feste Einheit mit einem Flansch (705A) einer Welle (705) bildet, deren Drehung in bezug auf den Motorblock (706) blockiert ist.

7. Motor nach einem der Ansprüche 1 bis 6,
**dadurch gekennzeichnet, daß** die ersten und zweiten Bremsmittel jeweils eine erste (42; 142; 342; 442; 642; 742; 842; 942) und eine zweite (44; 144; 344; 444; 644; 744; 844; 944) Reihe von Zähnen einer Klaue aufweisen, wobei die erste Reihe von Zähnen mit der aktiven Fläche des Bremskolbens fest verbunden ist.

8. Motor nach einem der Ansprüche 1 bis 7,
**dadurch gekennzeichnet, daß** die Mittel zur Verlagerung des Bremskolbens zwischen der Bremsstellung und der gelösten Stellung eine Bremslösungskammer (60; 160; 360; 460; 660; 760; 860; 960) aufweisen, die mit Druckflüssigkeit gespeist werden kann, wobei diese Kammer eine im wesentlichen radiale Wand umfaßt, welche von einer Fläche des Kolbens gebildet wird, die zur gleichen Seite wie die aktive Fläche dieses Kolbens weist und in bezug auf diese aktive Fläche axial verschoben ist.

9. Motor nach Anspruch 2 und 8,
**dadurch gekennzeichnet, daß** die Bremslösungskammer zwischen zwei abgestuften, axialen Abschnitten (48A, 48B; 148A, 148B) des Kopplungsrings und zwei abgestuften, axialen Abschnitten (40A, 40B; 140A, 140B) des Bremskolbens ausgebildet ist, wobei eine erste Dichtung (64; 164) zwischen dem ersten axialen Abschnitt des Rings und dem ersten axialen Abschnitt des Bremskolbens angeordnet ist, die einander gegenüberliegen, während eine zweite Dichtung (66; 166) zwischen dem zweiten axialen Abschnitt des Rings und dem zweiten axialen Abschnitt des Bremskolbens, die einander gegenüberliegen, angeordnet ist.

10. Motor nach Anspruch 9,
**dadurch gekennzeichnet, daß** die axialen Abschnitte (148A, 148B; 140A, 140B) des Kopplungsrings und des Bremskolbens (140), zwischen denen die Bremslösungskammer (160) angeordnet ist, ringförmig sind, wobei der erste axiale Abschnitt (148A) des Kopplungsrings durch einen Absatz (148C) an die innere axiale Kopplungsfläche dieses Rings anschließt, während der erste axiale Abschnitt (140A) des Bremskolbens (140) durch einen Vorsprung an die äußere axiale Kopplungsfläche dieses Kolbens anschließt.

11. Motor nach Anspruch 9,
**dadurch gekennzeichnet, daß** die innere axiale Kopplungsfläche (50; 150; 650; 750; 850; 950) und die äußere axiale Kopplungsfläche (54; 154; 654; 754; 854; 954) am ersten axialen Abschnitt des Kopplungsrings (47, 48; 147, 148; 348; 448; 602C; 702D; 947) bzw. am ersten axialen Abschnitt des Bremskolbens (40; 140; 340; 44; 540; 640; 740; 840; 940) ausgebildet sind, und daß es sich bei den Kopplungsprofilen um Wellenprofile handelt.

12. Motor nach einem der Ansprüche 1 bis 11,
**dadurch gekennzeichnet, daß** das Bremssystem Mittel zum mechanischen Lösen der Bremse mit wenigstens zwei Einheiten umfaßt, die jeweils ein axiales Innengewinde (90) aufweisen, das sich in dem Bremskolben (40) befindet und auf einer im wesentlichen radialen, den ersten Bremsmitteln (42) entgegengesetzten Fläche (41) dieses Kolbens offen ist, sowie eine axiale Bohrung (92), die in einem im wesentlichen radialen, dem Bremskolben (40) gegenüberliegenden Teil (2B) des Gehäuses ausgebildet und auf das axiale Innengewinde (50) dieses Kolbens ausgerichtet ist, wobei die genannten Einheiten zudem jeweils eine Schraube zum Lösen der Bremse umfassen, die in die axiale Bohrung des Gehäuses bis in das axiale Innengewinde des Bremskolbens eingeführt werden kann.

13. Motor nach Anspruch 7 sowie einem der Ansprüche 1 bis 12,
**dadurch gekennzeichnet, daß** er Mittel zum Messen der Drehzahl des Motors umfaßt, die einen Drehzahlgeber (380) aufweisen, der sich in einem Element (302B) des Stators des Motors befindet und jener (344) der ersten bzw. zweiten Reihe von Zähnen gegenüberliegt, die sich zusammen mit dem Rotor (306) des Motors dreht.

14. Motor nach einem der Ansprüche 1 bis 13,
**dadurch gekennzeichnet, daß** er vollständig von einem axialen Durchgang (270) durchquert wird, der im Bereich des Verteilers (216) von einer hohlen, zylindrischen Muffe (274) begrenzt wird, deren auf einer ersten Seite des Verteilers befindliches erstes axiales Ende (274A) in dichter Form mit der Wand einer axialen Bohrung (272) verbunden ist, die durch den Motorblock (206) verläuft und auf diese Muffe ausgerichtet ist, und deren auf der anderen Seite des Verteilers (216) befindliches zweites axiales Ende (274B) in dichter Form mit der Wand einer axialen Bohrung (278) verbunden ist, die durch das Gehäuse (202B) verläuft.

## Claims

1. A hydraulic motor (1; 801; 901) comprising:
- a casing (2A, 2B; 102A, 102B; 202B; 302A, 302B; 402A, 402B; 602A, 602B, 602C; 702A, 702D; 802A, 802B, 802C; 902A, 902B);
- a reaction member integral with or secured to the casing and having an internal periphery (4; 104; 304; 404; 504; 604; 704; 804; 904) that defines a reaction profile;
- a cylinder block (6; 106; 206; 306; 406; 606) which is mounted so that the cylinder block and the reaction member rotate relative to each other about an axis of rotation (10; 110; 210; 310; 410; 810), the cylinder block comprising a plurality of piston-and-cylinder sets comprising cylinders (12; 812) and pistons (14; 814), disposed radially relative to the axis of rotation and suitable for being fed with fluid under pressure;
- an internal fluid distributor (16; 116; 216; 316; 416; 616; 816; 916) constrained to rotate with the casing about the axis of rotation, and provided with distribution ducts (18; 818) that can put the cylinders in communication with fluid feed and exhaust ducts (32, 34; 822); and
- a braking system comprising first and second braking means (42, 44; 142, 144; 342, 344; 442; 444; 642, 644; 742, 744; 842, 844; 942, 944) constrained to rotate respectively with the casing and with the cylinder block about the axis of rotation, a brake piston (40; 140; 340; 440; 540; 640; 740; 840; 940) having a substantially radial active braking face to which a brake member is secured, said piston being suitable for taking up both a brake-releasing position and a braking position in which it urges the first and second braking means into braking engagement so as to prevent the cylinder block and the casing from rotating relative to each other, and as well as means (68, 60; 168, 160; 368, 360; 468, 460; 660; 768, 760; 868, 860; 968, 960) for displacing the brake piston between said braking and brake-releasing positions;
said hydraulic motor being **characterised in that** the brake piston (40; 140; 340; 440; 540; 640; 740; 840; 940) is constrained to rotate with the casing about the axis of rotation and the brake member which is secured to the active braking face of said piston is a first brake member (42; 142; 342; 442; 642; 742; 842; 942) belonging to the first braking means.

2. A motor according to claim 1, **characterised in that** it includes a coupling collar (47, 48; 147, 148; 348; 448; 602C; 702D; 947) which forms a portion of the casing and which has an internal axial face (50; 150; 650; 750; 850; 950) with which an external axial face (54; 154; 654; 754; 854; 954) of the brake piston co-operates to key said piston so that it is constrained to rotate with the casing, said internal and external axial faces having coupling profiles suitable for this purpose.

3. A motor according to claim 2, **characterised in that** the coupling collar (47, 48; 148) is constituted by an axial extension of the reaction member, which extension is integral with said reaction member.

4. A motor according to claim 2 or 3, in which the reaction profile (4; 104; 304; 404; 504; 604; 704; 804; 904) of the reaction member is formed by undulations, said motor being **characterised in that** the coupling profiles (50, 54; 150, 154; 650, 654; 750, 754; 850, 854; 950, 954) are also formed by undulations, the trough portions of the undulations of the coupling profile of the internal coupling -face extending axially in register with at least some of the trough portions of the undulations of the reaction member.

5. A motor according to any one of claims 1 to 4, **characterised in that** a second brake member (44; 144; 344; 444; 644; 844; 944) belonging to the second braking means is integral with or secured to an end face of the cylinder block (6; 106; 306; 406; 606; 806; 906) which extends facing the active face of the brake piston.

6. A motor according to any one of claims 1 to 4, **characterised in that** a second brake member (744) belonging to the second braking means is integral with or secured to a flange (705A) which equips a shaft (705) keyed so that it is prevented from rotating relative to the cylinder block (706).

7. A motor according to any one of claims 1 to 6, **characterized in that** the first and second braking means respectively comprise a first series of positive clutch teeth (42; 142; 342; 442; 642; 742; 842; 942) and a second series of positive clutch teeth (44; 144; 344; 444; 644; 744; 844; 944), the first series of teeth being integral with or secured to the active face of the brake piston.

8. A motor according to any one of claims 1 to 7, **characterised in that** the means for displacing the brake piston between the braking position and the brake-releasing position comprise a brake release chamber (60; 160; 360; 460; 660; 760; 860; 960) suitable for being fed with fluid under pressure, said chamber having a substantially radial wall which is formed by a face of the piston that faces the same way as the active face of said piston, and that is offset axially relative to said active face.

9. A motor according to claims 2 and 8, **characterised in that** the brake release chamber is formed between two stepped axial portions (48A, 48B; 148A, 148B) belonging to the coupling collar, and two stepped axial portions (40A, 40B; 140A, 140B) belonging to the brake piston, a first sealing gasket (64; 164) being disposed between the first axial portion of the collar and the facing first axial portion of the brake piston, while a second sealing gasket (66; 166) is disposed between the second axial portion of the collar and the facing second axial portion of the brake piston.

10. A motor according to claim 9, **characterised in that** the axial portions (148A, 148B; 140A, 140B) of the coupling collar and of the brake piston (140) between which the brake release chamber (160) is provided are annular, the first axial portion (148A) of the collar being connected to the coupling internal axial face of said collar via a setback (148C), while the first axial portion (140A) of the brake piston (140) is connected to the coupling external axial face of said piston via a shoulder.

11. A motor according to claim 9, **characterised in that** the coupling internal axial face (50; 150; 650; 750; 850; 950) and the coupling external axial face (54; 154; 654; 754; 854; 954) are respectively formed on the first axial portion of the coupling collar (47, 48; 147, 148; 348; 448; 602C; 702D; 947) and on the first axial portion of the brake piston (40; 140; 340; 440; 540; 640; 740; 840; 940), and **in that** the coupling profiles are undulating profiles.

12. A motor according to any one of claims 1 to 11, **characterised in that** the braking system comprises mechanical brake release means having at least two sets, each of which includes an axial tapped hole (90) provided in the brake piston (40) and opening out in a substantially radial face (41) of the piston, which face is opposite from the first braking means (42), and an axial bore (92) provided in a substantially radial portion (2B) of the casing, which portion is situated facing the brake piston (40) and aligned with the axial tapped hole (50) of said piston, each of said sets further including a brake release screw suitable for being inserted through the axial bore in the casing and into the axial tapped hole in the brake piston.

13. A motor according to claim 7, and any one of claims 1 to 12, said motor being **characterised in that** it includes means for measuring the speed of rotation of the motor, which means comprise a speed detector (380) received in an element (302B) of the stator of the motor and facing that one of the first and second series of teeth (344) which is constrained to rotate with the rotor (306) of the motor.

14. A motor according to any one of claims 1 to 13, **characterised in that** it is provided with a through axial passageway (270) which is defined in the region of the distributor (216) by a hollow cylindrical sleeve (274) whose first axial end (274A) situated on a first side of the distributor is connected in sealed manner to the wall of a through axial bore (272) provided in the cylinder block (206) and aligned with the sleeve, and whose second axial end (274B) situated on the other side of the distributor (216) is connected in sealed manner to the wall of a through axial bore (278) in the casing (202B).
